# EUROPEAN PATENT SPECIFICATION

(11) **EP 1 595 030 B1**
(45) Date of publication and mention of the grant of the patent: **26.01.2011**
(21) Application number: 04708952.9
(22) Date of filing: 06.02.2004
(51) Int. Cl.: E01H 1/08, A47L 9/32, B25G 1/06

(54) **HANDLE ARRANGEMENT FOR A BLOWER**
GRIFFANORDNUNG FÜR EIN GEBLÄSE
ENSEMBLE POIGNEE DESTINE A UN DISPOSITIF DE SOUFFLAGE

(30) Priority: 12.02.2003 SE 0300389
(43) Date of publication of application: 16.11.2005
(73) Proprietor: Husqvarna AB, 561 82 Huskvarna (SE)
(72) Inventor: NORINDER, Lotta, S-554 22 Jönköping (SE); JAKOBSSON, Anders, S-544 93 Hjo (SE); HAKANSSON, Thomas, S-561 38 Huskvarna (SE)
(86) International application number: PCT/SE2004/000157
(87) International publication number: WO 2004/072383

(56) References cited:
- US-A- 4 413 371
- US-A- 5 813 088
- US-A1- 2001 005 918
- US-A1- 2002 174 511
- US-B1- 6 409 097

## Description

The claimed invention relates to a blower, arranged to be carried on the back of an operator, comprising a handle or handles, said handle or handles are placed on a stiff section of a blower tube extending from the blower.

Engine powered blowers are frequently used for different kinds of outdoor work. The number of areas where blowers are used is increasing. In many areas are blowers replacing traditional brooms since a blower is an efficient and time saving tool for cleaning large areas such as parking places, pavements and lawns. The cleaning of, for example, a parking area with conventional equipment is difficult and time consuming because of parked cars and other obstacles on the parking place. If a blower is used is it possible to blow the rubbish from underneath or behind parked cars or obstacles, which increases efficiency and saves time as well as improves the final result.

Even though the blower is an efficient tool that facilitates the work of cleaning large areas, the operator normally works long shifts with the blower. There are two different types of blower, smaller ones that are hand held and larger models that are carried on the back of the operator in order to improve working conditions for the operator.

A blower carried on the back of the operator is supported by straps that extend over the shoulders of the operator. The blower is provided with a blower tube consisting of two sections, a first soft section secured to the fan outlet on the blower body on the back of the operator, and a second section that is a stiff pipe. The first soft section makes it possible to move the position of the stiff pipe. The blower tube extends from the fan outlet placed on one side of the blower on the back of the operator and forward to a position in front of the operator. On the blower tube is a handle secured to the tube so that the operator can control and steer the position of the end of the blower tube to in order to perform the work intended. The handle on blowers already existing on the market is placed on top of the blower tube somewhere along the blower tube and extending in a radial direction from the topside of the circumference of the blower tube, see for example US 5813068.

Even though a blower facilitates work for the operator, his arms and hands are subjected to heavy loads due to the design of the handle. These loads must be reduced to improve working conditions for an operator who is working long shifts with the tool. The claimed invention aims to reduce this problem.

The major part of the load that the operator is subjected to originates from a reaction force generated by the airflow in the blower tube. The air passing through the tube generates a reaction force acting in the opposite direction to the flow of the air.

Handles, which currently exist, are placed on top of the blower tube. This position results in a long distance between the centre of the handle and the centre of the tube. The long distance in combination with the reaction force from the airflow generates a turning movement in the handle. The reaction force and the turning movement in the blower tube will affect the operator's hands in such a way that the operator will have to use a considerable force to compensate for the turning movement and the reaction force in order to control the blower tube.

The claimed invention reduces the problem defined by placing the handle so that a longitudinal axle of the handle or handles is placed outside the circumference of the blower tube when seen in a plane perpendicular to the longitudinal axle of the blower tube. The projection of the longitudinal axle of the handle in said plane is also parallel to a straight line extending through the geometrical centre of the cross section of the blower tube.

This means that one side of the surface that is surrounding the handle will be placed towards the circumference of the stiff section of the blower tube. The handle is preferably placed as close to the blower tube as possible but there must be enough space for the fingers on the operator's hand between the surface of the handle and the blower tube.

This position of the handle reduces the distance between the centre of the blower tube and the centre of the handle. A shorter distance between the centre of the handle and the centre of the blower tube reduces the turning movement in the handle, and consequently the loads that the operator is subjected to. The distance between the surface of the handle where the operator holds his hand and the outer circumference of the blower tube is preferably between 15 to 60 millimetres. The distance is measured between the point at the circumference of the blower tube and the surface of the handle that are placed at the shortest distance from each other. If the distance is bigger the reduction of the turning movement in the handle that the operator is subjected to will be reduced.

The blower tube is either provided with one single handle or a handle bar comprising two handles. If a handle bar is used, one handle is placed on one side of the blower tube and the other on the opposite side according to the claimed invention.

The handle or handles are movable around, and also along, the stiff section of the blower tube so that the operator is allowed to select a position of the handle or handles that is suitable for the operator, no matter of the physical dimensions of the operator. This improves working conditions for the operator considerably.

The handle or handle bar is attached to a curved arm secured to the blower tube by a loop surrounding the blower tube. The arm first extends in a perpendicular direction from the blower tub and is then curved towards the operator in order to reduce the distance from the operator to the handle or handle bar. The curved arm makes it possible to have a blower tube with a long flexible section without ending up with a handle or handle bar placed to far away from the operator's body. This improves the manoeuvrability of the blower tube.

The curved arm is allowed to turn in relation to the blower tube. This makes it possible to change the angle between the longitudinal axle of the handle and the longitudinal axle of the blower tube so that the operator can select the most comfortable position of the handle.

The handle or handles comprises one or more buttons or power regulating devices in order to regulate the power or the tool.

The cross section of the blower tub is normally a circle but other cross sections will also work. The handle is then placed so that the longitudinal axle is parallel to a straight line that extends through the geometrical centre of the cross section in use.

One embodiment of the claimed invention is illustrated in the drawings.
- Figure 1.: Illustrates a perspective view of a blower carried on the back of the operator.
- Figure 2.: Illustrates a perspective view of a handle and a section of the blower tube.
- Figure 3.: Illustrates a top view of the handle and blower tub section in figure 2.
- Figure 4.: Illustrates a cross section of the blower tube and the handle in figure 2.

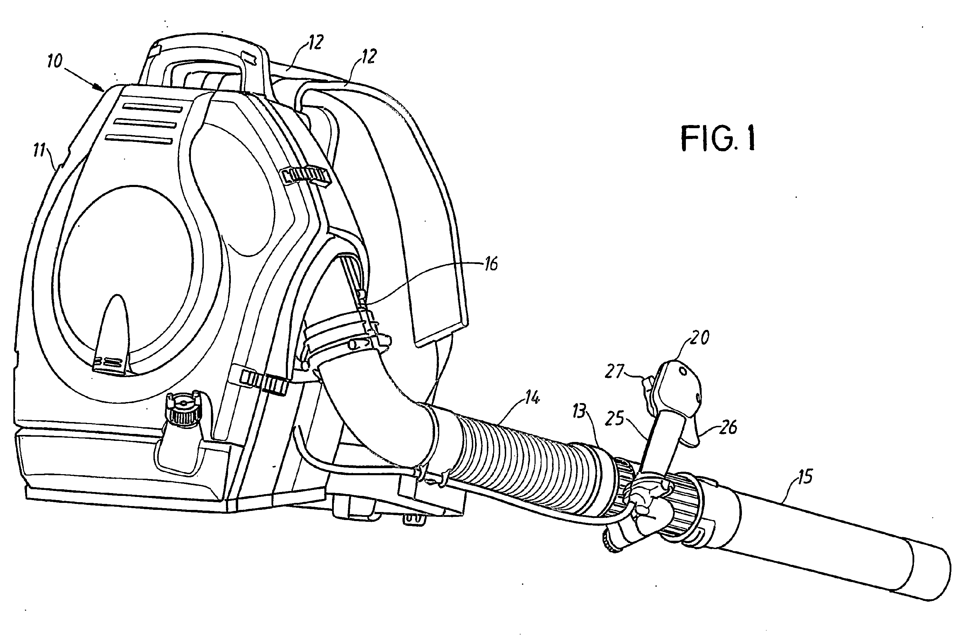

In figure 1 is a blower 10 illustrated. The blower 10 comprises a blower body 11 containing for example an engine, a fan and related components. The blower body 11 is provided with two straps 12 that are placed around the shoulders of the operator to make it possible for the operator to carry the blower 10 on his back.

A blower tube 13 is extending from a fan outlet 16 on the right side of the blower body 11. The blower tube 13 consist of two different sections, a first flexible section 14 that makes it possible to move the blower tube 13 between different positions and a second stiff section 15. A handle 20 is secured to the blower tube to make it possible for the operator to manoeuvre the blower tube 13. The handle 20 is designed with a surface 25 for the hand of the operator surrounding the middle section of the handle 20. In the top section of the handle are a throttle 26 and a stop button 27 placed to make it possible for the operator to control the blower 10.

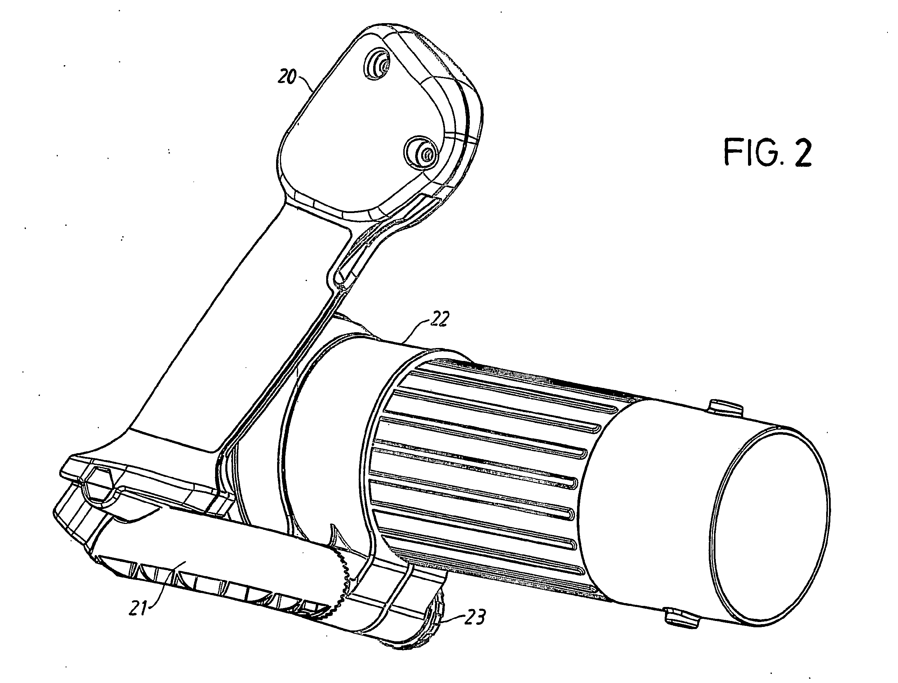

In figure 2 is a part of the blower tube 13 and the handle 20 illustrated. The handle 20 is secured to the stiff section 15 of the blower tube 13 and used for control and manoeuvring of the blower tube 13. The handle 20 is attached to a curved arm 21 secured to the blower tube 13 by a loop 22 surrounding the blower tube 13.

The loop 22 is fastened to the blower tube 13 by a screw 24 that is controlled by a wheel 23. When the screw 24 is released is the loop 22 released from the blower tube 13 so that the position of the loop 22 and the handle 20 in accordance to the blower tube 13 could be changed. The position of the handle 20 and the loop 22 is then selected somewhere around the circumference of the blower tube 13. The handle 20 and the loop 22 are also movable along the stiff section 15 of the blower tube 13. The position of the handle 20 is selected by the operator to be comfortable and ergonomic.

When the screw 24 is released is the curved arm 21 allowed to turn in relation to the loop 22 and the longitudinal axle of the blower tube 13. This makes it possible to change the angle of the handle 20 in relation to the longitudinal axle of the blower tube 13 so that the operator can select the most comfortable angle of the handle 20.

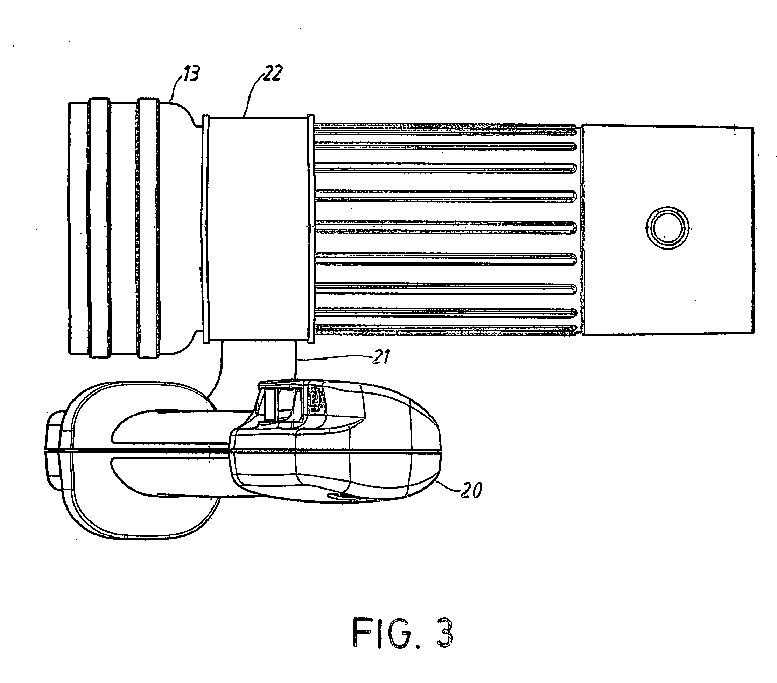

In figure 3 is a topside view of the handle 20, the curved arm 21 and the blower tube illustrated. The curved arm 21 extends in transverse direction from the blower tube and the loop 22 while the outer end of the curved arm 21 is pointing in the opposite direction as the blower tube 13. The curved arm 21 makes it possible to have a longer flexible section 14 of the blower tube 13 without risking that the handle 20 will be positioned to far away from the operator.

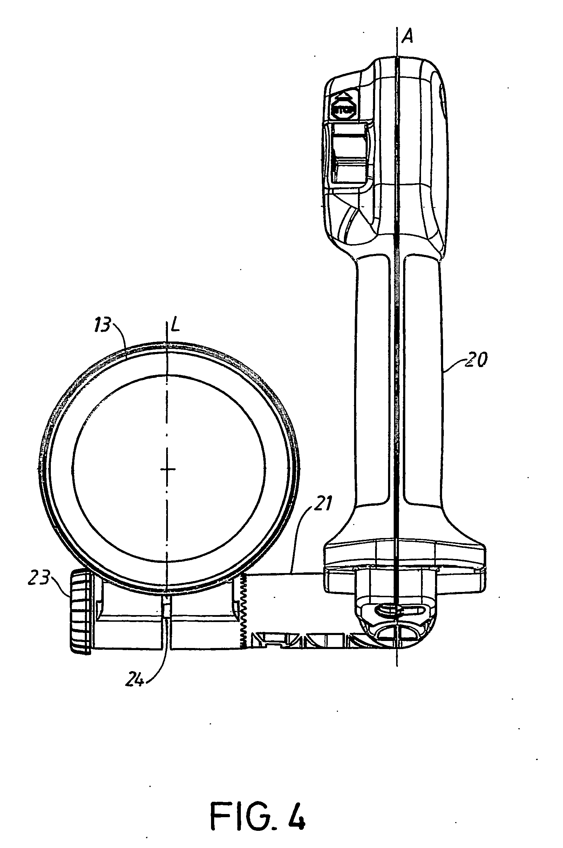

In figure 4 is a cross section of the blower tub 13 illustrated. The longitudinal axle A of the handle 20 is substantially parallel to a straight line L extending through the geometrical centre of the cross section of the stiff section 15 of the blower tube 13. If the handle 20 is moved around the circumference of the blower tub 13 will the longitudinal axle A of the handle 20 still be parallel to a straight line L in the blower tube 13.

The handle 20 is placed on the side of the blower tube 13 with the surface 25 for the hand of the operator close to the circumference of the stiff section 15. The distance between the surface 25 on the handle 20 and the circumference of the blower tube 13 is kept as short as possible but there must be space enough for the fingers of the operator. The distance is normally between 15 to 60 millimetres.

## Claims

1. Blower (10), arranged to be carried on the back of an operator, comprising a handle (20) or handles placed on a stiff section (15) of a blower tube (13) extending from the blower (10), **characterised in that** a longitudinal axle (A) of the handle (20) or handles is placed outside the circumference of the stiff section (15) of the blower tube (13) when seen in a plane perpendicular to the longitudinal axle of the stiff section (15) of the blower tube (13), and that the projection of the longitudinal axle (A) of the handle (20) in said plane is parallel to a straight line (L) extending through the geometrical centre of the cross section of the stiff section (15) of the blower tube (13).

2. Blower (10) according to claim 1, **characterised in that** the cross section of the stiff section (15) of the blower tube (13) is a circle.

3. Blower (10) according to claim 1 or 2, **characterised in that** the handle (20) or handles are placed so that the distance from the outer side of the blower tube (13) to a surface (25) on the handle where the operators hand is placed during normal use of the tool not exceeds 100 millimetres.

4. Blower (10) according to claim 3, **characterised in that** the distance is between 15 to 60 millimetres.

5. Blower (10) according to claim 1, 2, 3 or 4, **characterised in that** the handle (20) or handles is movable around the circumference of the blower tube (13).

6. Blower (10) according to claim 1, 2, 3, 4 or 5, **characterised in that** the position of the handle (20) or handles in axial direction along the tube (13) is adjustable.

7. Blower (10) according to any of the previous claims, **characterised in that** the blower tube (13) is provided with one handle (20) or a handle bar comprising two handles.

8. Blower (10) according to any of claim 1 to 7, **characterised in that** the handle (20) or handles are placed on a curved arm (21) so that the position of the handle (20) or handles are closer to the operator than the position where the curved arm (21) is secured to the blower tube (13).

9. Blower (10) according to claim 8, **characterised in that** curved arm (21) is secured to the blower tube (13) by a loop (22) surrounding the blower tube (13).

10. Blower (10) according to claim 9, **characterised in that** the loop (22) is secured to the blower tube (13) by a screw (24) activated by a wheel (23).

11. Blower (10) according to claim 10, **characterised in that** the curved arm (21) and the handle (20) is turnable when the screw (24) is released so that the angle between the longitudinal axle (A) of the handle (20) in relation to the longitudinal axle of the blower tube (13) is changed.

## Patentansprüche

1. Gebläse (10), welches dafür geeignet ist, auf dem Rücken eines Bedieners getragen zu werden, und welches einen Griff (20) oder Griffe umfasst, der/die auf einem steifen Abschnitt (15) eines Gebläserohrs (13) angeordnet ist/sind, welches sich aus dem Gebläse (10) heraus erstreckt, **dadurch gekennzeichnet, dass** eine Längsachse (A) des Griffs (20) oder der Griffe außerhalb des Umfangs des steifen Abschnitts (15) des Gebläserohrs (13) angeordnet ist, gesehen in einer Ebene senkrecht zu der Längsachse des steifen Abschnitts (15) des Gebläserohrs (13), und dass die Projektion der Längsachse (A) des Griffs (20) in der Ebene parallel zu einer geraden Linie (L) verläuft, die sich durch die geometrische Mitte des Querschnitts des steifen Abschnitts (15) des Gebläserohrs (13) erstreckt.

2. Gebläse (10) nach Anspruch 1, **dadurch gekennzeichnet, dass** der Querschnitt des steifen Abschnitts (15) des Gebläserohrs (13) ein Kreis ist.

3. Gebläse (10) nach Anspruch 1 oder 2, **dadurch gekennzeichnet, dass** der Griff (20) oder die Griffe so angeordnet ist/sind, dass der Abstand von der Außenseite des Gebläserohrs (13) zu einer Fläche (25) auf dem Griff, wo beim normalen Gebrauch des Werkzeugs die Hand des Bedieners angeordnet wird, nicht größer als 100 Millimeter ist.

4. Gebläse (10) nach Anspruch 3, **dadurch gekennzeichnet, dass** der Abstand 15 bis 60 Millimeter beträgt.

5. Gebläse (10) nach Anspruch 1, 2, 3 oder 4, **dadurch gekennzeichnet, dass** der Griff (20) oder die Griffe um den Umfang des Gebläserohrs (13) herum beweglich ist/sind.

6. Gebläse (10) nach Anspruch 1, 2, 3, 4 oder 5, **dadurch gekennzeichnet, dass** die Position des Griffs (20) oder der Griffe in axialer Richtung an dem Rohr (13) entlang einstellbar ist.

7. Gebläse (10) nach einem der vorhergehenden Ansprüche, **dadurch gekennzeichnet, dass** das Gebläserohr (13) mit einem Griff (20) oder einer Griffstange, die zwei Griffe umfasst, versehen ist.

8. Gebläse (10) nach einem der Ansprüche 1 bis 7, **dadurch gekennzeichnet, dass** der Griff (20) oder die Griffe derart auf einem gekrümmten Arm (21) angeordnet ist/sind, dass sich die Position des Griffs (20) oder der Griffe näher am Bediener befindet als die Position, wo der gekrümmte Arm (21) an dem Gebläserohr (13) befestigt ist.

9. Gebläse (10) nach Anspruch 8, **dadurch gekennzeichnet, dass** der gekrümmte Arm (21) an dem Gebläserohr (13) durch eine Schelle (22) befestigt ist, welche das Gebläserohr (13) umgibt.

10. Gebläse (10) nach Anspruch 9, **dadurch gekennzeichnet, dass** die Schelle (22) mit einer Schraube (24) an dem Gebläserohr (13) befestigt ist, die mit einem Rad (23) betätigt wird.

11. Gebläse (10) nach Anspruch 10, **dadurch gekennzeichnet, dass** der gekrümmte Arm (21) und der Griff (20), wenn die Schraube (24) gelöst wird, derart drehbar sind, dass der Winkel zwischen der Längsachse (A) des Griffs (20) und der Längsachse des Gebläserohrs (13) verändert wird.

## Revendications

1. Souffleuse (10) agencée pour être portée sur le dos d'un opérateur, comprenant une ou des poignées (20) placées sur une partie rigide (15) d'un tube de souffleuse (13) qui s'étend à partir de souffleuse (10), **caractérisée en ce qu'**un axe longitudinal (A) de la ou des poignées (20) est placé à l'extérieur de la circonférence de la partie rigide (15) du tube de souffleuse (13), vu dans un plan perpendiculaire à l'axe longitudinal de la partie rigide (15) du tube de souffleuse (13), et **en ce que** la projection de l'axe longitudinal (A) de la poignée (20) dans ledit plan est parallèle à une ligne droite (L) passant par le centre géométrique de la section transversale de la partie rigide (15) du tube de souffleuse (13).

2. Souffleuse (10) selon la revendication 1, **caractérisée en ce que** la section transversale de la partie rigide (15) du tube de souffleuse (13) est un cercle.

3. Souffleuse (10) selon la revendication 1 ou la revendication 2, **caractérisée en ce que** la ou les poignées (20) sont placées de telle façon que la distance entre la face extérieure du tube de souffleuse (13) et une surface (25) de la poignée sur laquelle la main de l'opérateur est posée pendant l'utilisation normale de l'outil ne dépasse pas 100 millimètres.

4. Souffleuse (10) selon la revendication 3, **caractérisée en ce que** la distance va de 15 à 60 millimètres.

5. Souffleuse (10) selon la revendication 1, 2, 3 ou 4, **caractérisée en ce que** la ou les poignées (20) sont mobiles autour de la circonférence du tube de souffleuse (13).

6. Souffleuse (10) selon la revendication 1, 2, 3, 4 ou 5, **caractérisée en ce que** la position de la ou des poignées (20) dans le sens axial le long du tube (13) est réglable.

7. Souffleuse (10) selon l'une quelconque des revendications précédentes, **caractérisée en ce que** le tube de souffleuse (13) est équipé d'une seule poignée (20) ou d'un guidon comprenant deux poignées.

8. Souffleuse (10) selon l'une quelconque des revendications 1 à 7, **caractérisée en ce que** la ou les poignées (20) sont placées sur un bras incurvé (21) de façon que la position de la ou des poignées soit plus proche de l'opérateur que la position dans laquelle le bras incurvé (21) est fixé au tube de souffleuse (13).

9. Souffleuse (10) selon la revendication 8, **caractérisée en ce que** le bras incurvé (21) est fixé au tube de souffleuse (13) par un collier (22) entourant le tube de souffleuse (13).

10. Souffleuse (10) selon la revendication 9, **caractérisée en ce que** le collier (22) est fixé au tube de souffleuse (13) par une vis (24) actionnée par un volant (23).

11. Souffleuse (10) selon la revendication 10, **caractérisée en ce que** le bras incurvé (21) et la poignée (20) peuvent tourner lorsque la vis (24) est desserrée afin de faire varier l'angle entre l'axe longitudinal (A) de la poignée (20) par rapport à l'axe longitudinal du tube de souffleuse (13).
